# EUROPEAN PATENT SPECIFICATION

(11) **EP 2 289 286 B1**
(45) Date of publication and mention of the grant of the patent: **15.04.2015**
(21) Application number: 09762100.7
(22) Date of filing: 03.06.2009
(51) Int. Cl.: H05B 37/02

(54) **PROGRAMMABLE USER INTERFACE DEVICE FOR CONTROLLING AN ELECTRICAL POWER SUPPLIED TO AN ELECTRICAL CONSUMER**
PROGRAMMIERBARE BENUTZERSCHNITTSTELLENVORRICHTUNG ZUR STEUERUNG DER STROMVERSORGUNG EINES ELEKTRISCHES GERÄTES
DISPOSITIF D'INTERFACE UTILISATEUR PROGRAMMABLE POUR COMMANDER UNE PUISSANCE ÉLECTRIQUE FOURNIE À UN CONSOMMATEUR ÉLECTRIQUE

(30) Priority: 10.06.2008 EP 08104340
(43) Date of publication of application: 02.03.2011
(73) Proprietor: Koninklijke Philips N.V., 5656 AE Eindhoven (NL)
(72) Inventor: DIEDERIKS, Elmo, M., A., 5656 AE Eindhoven (NL)
(74) Representative: Bekkers, Joost J.J.
(86) International application number: PCT/IB2009/052340
(87) International publication number: WO 2009/150573

(56) References cited:
- EP-A- 0 990 966
- US-A- 5 962 992
- US-A1- 2006 290 710
- US-B1- 6 388 399

## Description

### FIELD OF THE INVENTION

The invention relates to a user interface device and to a method for controlling an electrical consumer. Further it relates to a light system controlled by such user interface device.

### BACKGROUND OF THE INVENTION

In the fields of controlling electrical consumers control switches, user interface devices or dimmers are used to adjust an amount of an electrical power provided from an electrical power source to an electrical consumer. The electrical consumer might be a lamp in a light system or a lighting system including a plurality of different lamps, an electrical motor in a home appliance like a kneading machine or in a vacuum cleaner or an electrical heater. In the easiest case the switch is a hard switch for merely switching on/off the power supply to the electrical consumer. In an on state, the maximum available electrical power is supplied to the electrical consumer and in the off state, no electrical power is supplied to the electrical consumer. Soft switches like dimmers can be applied to continuously adjust the electrical power supply to the electrical consumer. Such dimmers have become popular in controlling light appliances.

Light appliances are one of the most important ambience makers. People use light appliances to create different ambiences for different moods or activities. Research has shown that people also like to use colored light to further enhance those ambiences. Therefore, light appliances include a full color light sources to enable people to create these ambiences.

Further advanced light appliances are flexible and integrated. Such light appliances comprise multiple full color light sources, variable color temperature light sources and 'normal' functional light sources. In some cases such light appliances further interacts with other electrical consumer loads like a HIFI-device, an electrical heater or an air-conditioner to further enhance the ambience generation. In other words, modem light appliances do not only comprise a conventional illumination function but also ambience creation functions for influencing the mood in a room. At the beginning, these functions where merely applied in professional environments in offices and shops. However, this kind of ambience creation becomes more and more popular to average users.

Since these advanced light appliances include a plurality of different lamps and in particular multiple full color light sources and/or variable color temperature light sources, the control of these advanced light appliance is very complex. The light controller requires a unique switch for each of the ambience creation function. This results not only in a huge space requirement for the overall light controller but makes the light controller also difficult to use for average users. These discussed disadvantages are also valid for other electrical consumer loads to be controlled by a switch.

WO 2007/072315 proposes to interconnect a user interface and a light source to be electrically controlled by the user interface with an electronic controller. The electronic controller receives an instruction from the user interface and adjusts the electrical power at the light source based on the user instruction.

US 6,388,399 B1 describes an electrical control system including a plurality of electrical devices communicates over a network and interfaces and works with non-protocol devices and signals that only send/receive an on/off digital signal or send/receive one of numerous analog signals.

However, the application of conventional control devices for controlling an electrical consumer is getting more complex or unmanageable with an increase of the complexity of the overall system. This makes it difficult to use conventional control devices especially for the average user.

### OBJECT AND SUMMARY OF THE INVENTION

Thus, it is an object of the present invention to provide a cost effective user interface device with an improved usability for an average users.

The object is solved by the features of the independent claims.

The invention is based on the thought that a good interaction solution for controlling an electrical consumer enables the average user to recognize the effect of its setting in a feedback way. This will become especially important, if multiple functions are integrated in one user interface device. In case of a light appliance, this may be brightness setting, color setting, on/off switching, timing control, and so on. In a conventional control system the user does not explicitly know the effect of the setting in advance. This must be learned by the user prior. The invention enables to integrate the presentation of the effect of the control settings in a feedback/feed forward way. Thus, the user is able to recognize the effect before actuating the setting or directly during setting and to intuitively use the user interface device. This allows to omit extensive training with the user interface device prior to use, such that the user interface device is especially suitable for the average user, having less time for such an extensive training.

Therefore, the present invention proposes a user interface device for controlling an electrical consumer comprising a manual control device and an electrical control device. The manual control device includes an input unit and a display unit. If a user performs an input at the input unit, the input unit generates a switching signal based on that user input and transmits it to the electronic control device. The electronic control device generates an information signal based on at least that switching signal and/or a feedback signal of the consumer load and transmits it to the display unit of the manual control device. The information signal includes information at least indicating a direct relation between a presentation on the display unit and the control setting of the electrical consumer, wherein the display unit is adapted to display a presentation based on that information included in the received information signal.

Due to the information in the information signal, the user is able to immediately get information about its setting effect at the electrical consumer. This enables the user to apply the user interface device in an intuitive way. Therefore, the required training for getting familiar with the control setting is reduced, since the user need not to learn the relation between a setting and its effect. Therefore, the inventive user interface device is especially suitable for a user having not much time for an extensive training for getting familiar with the user interface device. Moreover, the inventive user interface device can be reprogrammed, since the electronic control device may be programmed to output different information signals to the display unit and control signals to the electrical consumer.

The information signal may be generated based on the switching signal. Thus, the user will get feed forward information of the intended setting before outputting the respective command to switch the consumer load. This provides the possibility to try a certain control before applying the setting.

On the other hand the inventive user interface device receives a feedback signal from the connected consumer load. This may be suitable, if the user wants to directly recognize the effects of its control, if the consumer is hidden or located far away. In such a case the consumer load provides its states or other parameters required for effectively control the consumer load, and the electronic control device may generate the information signal based on this feedback signal alone. In case of a defect consumer load the user interface device may illustrate the defect state of the consumer load on the display unit, thus the user may recognize that an intended control is not possible. Similarly, it may be illustrated if any other intended control is not possible for any reason, e.g. the consumer load does not posses the required ability.

Further, the electronic control device uses both signals, the switching signal indicating the desired control of the user and the feedback signal received from the consumer load to generate the information signal, which is displayed on the display unit. By this the user gets complex information what are the results of the user input, and the current situation of the connected consumer load is also considered when generating the information signal.

For an example, if the consumer load is a complex lighting system and the user wants to control to achieve a smooth light, the electronic control device generates on the one hand the control signals for controlling the consumer load and on the other hand the information signal, which includes information for representing on the display unit of the manual control device a smooth light. Thus, the user gets a feeling of the effect of its input. Moreover by additionally using the feedback signal the user interface device can indicate a defect lamp of the lighting system, for example by switching off a certain part on the display unit indicating the respect defect lamp.

In a preferred embodiment, the electrical consumer may be a light appliance or light system, and the direct relation indicated by the display information included in the information signal output by the electronic control device is a direct relation between light output by the display unit, and the control setting of the light appliance or light system.

In recent years light appliances are equipped with more and more functions like brightness dimming, color setting, ambience setting, timing functions, simple on/off switching, and so on. All of these setting features require training for learning the relation between setting and effect. However, by providing the feedback/ feed forward information signal to the display unit according to the present invention, the user can directly understand the effect of its setting compactly on the display. Thus, especially for modem light appliances, the present invention is especially effective in use.

The light output by the display unit may represent a characteristic of the light setting of the light appliance. This enables to directly verify the effect of the setting with the expected effect.

The characteristic of the light setting may be at least one of on/off switching, brightness dimming, color temperature setting, day light setting or color control. These functions can be presented on the display unit in an understandable and illustrative way, wherein each of the functions may be provided by a different presentation principle. As for example, the on/off switching may be displayed by a simple switch. The brightness dimming can be directly shown by the brightness of the display. The color temperature setting may be displayed by various coloring the presentation on the display. The daylight setting may be realized by simple pictures. The color control may be realized by a color bar. Thus, these light settings are especially suitable for a user-friendly presentation on the display unit.

The display unit may be a matrix of light emitting diodes. This enables to realize a low-resolution display in a very cost effective way. The LEDs could be easily controlled and provide a full color range which is very suitable for displaying color and brightness setting on the display unit. Moreover, the power consumption of the LEDs is very low and thus the heat dissipation is manageable. By using LEDs the application of expensive LCDs is avoided. Even full colors LEDs may illustratively represent the effects of light systems, since they may represent different colors, color temperatures, saturation levels, brightness etc.

The input unit may be a matrix of touch sensitive elements. This enables to provide a plurality of different input possibilities in a very cost effective way. The touch sensitive elements may be operated based on capacitive sensing. By using touch sensitive elements the control device could be easily reprogrammed and different control functions could be realized by the same device without requiring different input and display units.

Capacitive sensing is technically easy to realize, less complex to program and robust against interferences. Thus, the solution is very cost effective. Further, average users are not very familiar with progressive input means. Thus, it must be guaranteed, that the input of a plurality of different user types, exemplary hard pressing users and soft pressing users, would lead to the same setting effect. Since capacitive sensing is robust against interferences, this requirement would be fulfilled.

The input unit and the display unit may be arranged internested to each other in a common layer. The arrangement of the input unit and the display unit in a common layer is especially suitable, if the user interface device should be embodied light weight with less material. Further, such an embodiment would save space for the overall system due to its flat shape.

Alternatively, the input unit and the display unit may be arranged stacked on each other, wherein the input unit is arranged in front of the display unit from a user view. The arrangement of the input unit in front of the display unit is especially suitable for increasing the sensitivity of the input unit. This has the advantage, that the sensitivity of the input unit against interferences would be further reduced. Moreover the control of the LED matrix could be easily achieved, since the LED matrix is easily connectable if it is arranged behind the touch pad. Further, the heat dissipation could use the whole back surface of the manual control device.

Alternatively, the input unit may also be arranged behind the display unit. Such an embodiment would get along without realizing the input unit in a transparent way, since the input unit is arranged behind the display unit. Thus, there are more different material types available for realizing the input unit enabling to use further cost-effective materials and constructions for the input unit.

The user interface device may further include a loudspeaker for outputting audio information included in the information signal. The electronic control device may insert audio information into the information signal, which is preprogrammed or generated in real-time. This increases the output possibilities for providing any feedback information to the user facilitating the intuitive usage of the overall system. Thus, a click or beep could be outputted for indicating a change user input or a confirmed command for advising the electronic control device to output the control signals to the consumer load. The audio information may be preprogrammed in the electronic control device. This would not only enable to provide a plurality of different type of audio information to be output, but also to adapt the user interface device to the personal ideas of a user. The audio information may also be generated in real-time in the electronic control device. This allows to omit memory means in the electronic control device for storing preprogrammed audio information further reducing the complexity of the overall system.

The electronic control device may include at least one memory for storing at least one electronic control function and at least one microprocessor for generating the information signal based on the switching signal and one of the at least one electronic control function. Moreover, the electronic control device includes an output unit for outputting the control signals and/or commands to the consumer load.

By using such an electronic control function it is possible to transform the switching signal into a suitable presentation to be displayed to the user on the display unit. Thus, the electronic control function allows to further facilitate the presentation of the feedback information provided to the user and to enable a more intuitive use of the overall system.

One single microprocessor may be adapted to perform a plurality of electronic control functions. This reduces the required space for electronics in the user interface device.

However, one single microprocessor may be adapted to perform one single electronic control function. This allows to perform a plurality of electronic control functions synchronously to each other, without requiring to run complex operation software on one microprocessor for e.g. enabling multitasking functionality. Further, complex operation software requires a powerful and expensive microprocessor. Thus, using a single microprocessor for each electronic control function not only enables more effective control functionality but also further reduces costs.

The microprocessor may be adapted to individually address the light emitting diodes in the matrix of the light emitting diodes. This allows to optimally use the low-resolution functionality of the matrix of light emitting diodes.

The user interface device may include a plurality of different control functions, wherein the control functions may be provided via a communication port to the microcontroller. Alternatively, control functions may be stored in a memory of the electronic control device or may be provided with an exchangeable memory.

This allows to provide control functions after finishing the production of the user interface device. This might be important to update the user interface device to progressive light appliances.

The communication port may preferably be a programming port or a network port. The programming port enables a skilled user to create individual control functions by programming the microcontroller. The network port enables an unskilled user to individualize the user interface device based on preprogrammed control functions, which may be provided by the manufacturer or a community.

The network port may be a DALI (Digital Addressable Lighting Interface) port, such that the data transmitted to the control device and from the control device are in line with a common standard for light appliances.

At least one of the control functions may be a navigation function to be displayed on the display unit to allow the user to choose different control function to control the connected consumer load. Further, it facilitates an intuitive use of the user interface device, since the display unit does not require to display all information on one screen but can provide a structured presentation with a clear visible overview. The navigation function may be enabled based on a type of a covering layer attached on the manual control device or based on an identification element of an ID card or of a paper inserted into the manual control device. This allows to provide a standard user interface device for a plurality of different application cases and to finalize the installation at the user's end by inserting such identification element activating the required control functions. The identification element may be a paper inlay. Such paper inlay allows to combine the activation of the correct control functions with providing user information like a users manual. Moreover, the paper may display a certain representation, which is illuminated by the LED Matrix.

The identification element may also be included in an identification signal received via an antenna or a connection cable from a server or from the internet, thereby allowing manufacturers to complete the installation of the user interface device in a remote way.

The user interface device may further include a covering layer for covering the manual control device. On the first hand, this protects the manual control device from impurities from the environment and in particular from the interaction with the user.

Preferably, the covering layer may have a diffuse surface. Thereby, the covering layer serves as light diffuser diffusing the light output by the display unit. Thus, the presentation of the display unit would appear to the user in a smooth glow of light. This would be especially of interest when using the matrix of light emitting diodes, which appears to the user very coarse grained due to its low resolution and can therefore be displayed more naturally.

In a further embodiment, the surface of the covering layer may include a relief to indicate areas on the input unit, which are adapted to receive a user input. The relief provides a kind of haptic structure on the surface which the user can feel. This would provide a further intuitive information source for the user when operating the user interface device. By using the relief the intuitive application of the user interface device is further facilitated, since the user recognizes the direction where to move its fingers on the touch pad.

The covering layer may also include a slot for accommodating a paper or an ID card. This would enable to provide further information like a user manual or a simple representation for controlling the consumer load. The paper may illustrate an arrangement of different lamps of the particular room. Thus the user can recognize, which lamp should be controlled and the respective state of the lamp, e.g. on/off, bright light, smooth light, color of certain lamp, etc.

The LED Matrix is capable to display the states or colors of the connected light system, but could also illustrate simple symbols or text. Thus, it could be used to provide further information to the user.

The object is solved by a method for controlling a consumer load, comprising the steps of: receiving a user input on an input unit and generating a switching signal based on the user input; generating a control signal based on the switching signal for controlling the consumer load; generating an information signal based on the switching signal, outputting the control signal to the electrical consumer, and outputting the information signal to a display unit including information at least indicating a direct relation between a presentation on the display unit and the control setting of the electrical consumer; displaying the presentation on the display unit based on information included in the received information signal.

Further the object is solved by a computer program or computer program product performing the steps of the method as claimed when executed on a computer. Moreover, a data carrier including such a computer program solves the object. Finally, the object is solved by a computer executing such a computer program.

A further problem to which the invention provides a solution is the weight and space of the manual control device. Conventional manual control devices include an input unit for providing a switching signal to an electronic control device controlling the electrical consumer load. Recent manual control devices further include a display unit for providing further information to the user, like indicating a setting range of the electrical consumer load or merely a short manual. However, the combination of the display unit and the input unit increases the weight and the required space of the manual input device.

It is therefore a further object of invention, to reduce space and weight of a manual control device for controlling an electrical consumer load.

This object is solved based on the thought, that the input unit and the display unit are structured based on sub-structures. As for example, a display unit usually comprises a plurality of LEDs arranged in a matrix. Thus, the sub-structure of the display unit is a single LED. The sub-structure of the input unit may be a touch element. It is proposed to internest these sub-structures of the input unit and the display unit with each other in a common layer.

The sub-structures of display unit and the input unit are arranged internested in a common layer. Due to the arrangement of single LEDs and the touch elements in a common layer, the present invention allows to safe a second layer for carrying the input unit or the display unit. This allows to omit the material for that second layer saving material costs as well as space and weight for that second layer. Thus, the manual control device will be cheaper, lighter and smaller. Such manual control device could be combined with a user interface device as described.

Preferably an alternative construction for the input device is proposed. In detail, the invention proposes an alternative construction of the touch sensitive device. Conventional touch sensitive devices are operated based on capacitive sensing, wherein in this construction, a change in the permittivity of a small capacitor is determined to detect a touch. The present invention is based on the thought to analyze a light guided by a light source through a light guidance layer to a light receiver to detect disturbances of that light. These disturbances occur, when a light guidance layer will be distorted due to a touch. Thus, based in these distortions, a position of a touch may be unambiguously determined. The touch sensitive device comprising a light guidance layer having a user input face and a light generating unit for outputting light, which is coupled into at least one side face of the light guidance layer. The light-generating unit generates a reference light, e.g. infrared light. Further, a light reception unit is coupled to an opposing side face of the light guidance layer, wherein the light reception unit receives light guided through the light guidance layer.

The touch sensitive device then compares the light received through the light guidance layer with the reference light and determines a position of a user input based disturbances in the received light. With such a touch sensitive device, an alternative input unit to conventional input units is provided. In particular, the kind of light generated by the light-generating unit is invisible to the user. For this reason, such input device could be easily combined with a user interface device described above. The infrared light does not interfere with the light outputted by the LED matrix to provide the respective effects to the user as feedback via the display unit. Such input device could advantageously integrated into a user interface device as claimed.

A further aspect of the invention relates to a user interface device for controlling an electrical consumer. The user interface device includes a manual control device and an electronic control unit. The manual control device includes a display unit and an input unit and generates a switching signal based on a user input. This switching signal is provided to the electronic control unit. The electronic control device is connected with the manual control device for displaying a control function on the display unit. Moreover, the electronic control device is connected with the consumer load to output an adjusted electrical power or a command for controlling the consumer load. The electronic control unit includes a reading unit for identifying a control function to be performed by the user interface device. Based on the identity of the control function the electronic control device generates the information signal provided to the display unit. Thus, the information signal may be based on the switching signal and/or a feedback signal received from the consumer load and/or the identified control function. The control function could be identified by reading an RFID-Tag included in an ID card coupled to the control system. Thus, the user interface device could be personalized. Further, the amount of control functions could be adapted to the user or to the system administrator. If the user interface device is connected to a network, the reader identifies the control function in the received data and may thus illustrate the respective control elements on the display unit representing the control function. Thus the user interface device could be easily programmed from remote.

Such user interface device could be combined with the user interface device described in claims 1-9 additionally providing information of the effects of a user input on the display unit.

### BRIEF DESCRIPTION OF THE DRAWINGS

The invention will be described in greater detail hereinafter, by way of nonlimiting examples, with reference to the embodiments shown in the drawings.
- Fig. 1: is an general construction of a manual control device and the electronic control device connected to a consumer load according to the present invention; and
- Fig. 2: illustrates a layout construction of the manual control device according to the invention;
- Fig. 3: showing the manual control device having an input unit and a display unit in a common layer;
- Fig. 4: illustrates an inventive input unit usable for the user interface device according to the present invention;
- Fig. 5: illustrates examples for a diffusing cover layer having a relief according to the present invention.
- Fig. 6: illustrates a first embodiment of the construction of the electronic control device according to the present invention.
- Fig. 7: illustrates a second embodiment of an electronic control device according to the present invention.
- Fig. 8: illustrates two different user interface devices for controlling a light system.
- Fig. 9: illustrates a navigation function for the user interface device according to the present invention.
- Fig. 10: illustrates different realizations of the manual control device according to the present invention.

### DESCRIPTION OF EMBODIMENTS

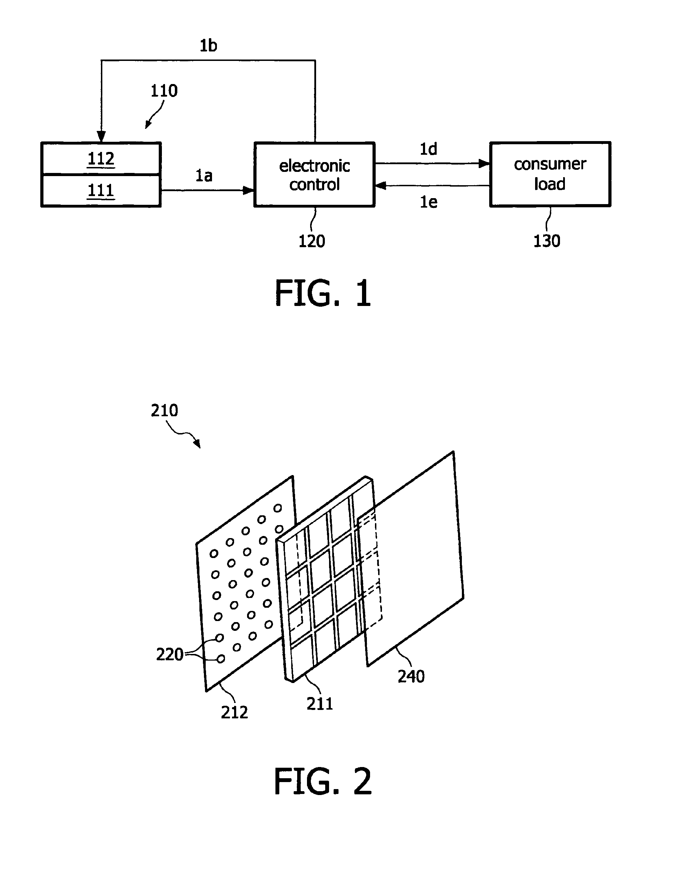

Fig. 1 illustrates a general structure of a user interface device according to the present invention having a manual control device 110, an electronic control device 120 and a consumer load 130. The manual control device 110 includes a display unit 112 and an input unit 111. The input unit 111 generates a switching signal 1b based on the user input, which is provided to the electronic control device 120, which generates based on the received switching signal 1a an information signal 1b, which is provided to the display unit 112.

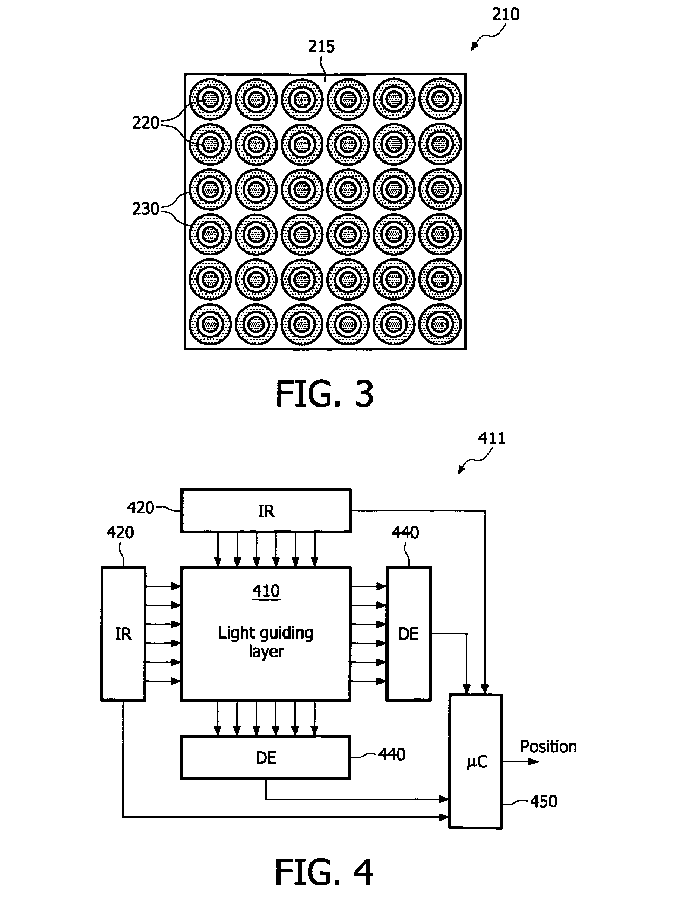

Moreover, the electronic control device 120 receives a feedback signal 1e from the consumer load 130 indicating a state or further parameters from the consumer load 130. The electronic control device 120 generates control signals or commands 1d, which are adapted to adjust the electrical power provided to the consumer load 130 according to user input on the manual control device 110. The information signal 1b generated in the electronic control device 120 includes a direct relation between the outputted control signals 1d and/or the effects of the user input. Thus, the user will get information on the display unit 112 just before or directly during controlling the consumer load via the display unit 112. The display unit 112 includes a plurality of full color LEDs, which are arranged in matrix form. By using such LED matrix 220 as illustrated in figs. 2 and 3, the user interface device provides means for representing a feed forward or feedback information on the effects of the user input or on the status of the connected light system to the user after receiving the control signal 1d based on the user input. By illustrating the effects of the intended/currently performed control also via the LED matrix 220 on the display unit 112, 212 the user can receive direct information of the brightness, color, on/off state, etc. of the connected lighting system.

In the simplest realization, the manual control device 110 includes a display unit 112 and the input unit 111. According to the embodiment shown in fig. 2, the manual control device 210 includes three layers. The first layer is the display unit 212 covered by the second layer including the input unit 211, wherein the input unit 211 is covered by a covering layer 240, which serves as a protection and/or defusing layer.

In fig. 2 the second layer including the sensitive input layer 211 is arranged between the diffusing cover layer 240 and the display layer 212. However, it is also possible to exchange the input layer 211 and the display unit 212 resulting in a manual control device 210 having the touch sensitive input layer 211 at its back surface and the display layer 212 between the cover layer 240 and the input layer 211. In such an embodiment, it is not necessary to provide the sensitive input unit 211 as transparent material. Thus, a plurality of materials could be used for realizing the touch sensitive input device 211. However, in this case the user inputs need to be transferred trough the display unit 212 arranged between the input unit 211 and the cover layer 240. By arranging the LED matrix 220 on a flexible form, it is possible to transfer a user input from the flexible cover layer 240 through the display layer 212 to the input unit 211.

The cover layer 240 is mostly used for diffusing the light of the full color LED matrix. Thus, the user may recognize a smooth color and not the single LED itself. As shown in fig. 2, the manual control device 210 looks similar to a conventional light switch, so that a user will recognize it as a light controller. When arranging the input layer 211 in front of the display layer 212, the covering layer 240 needs not to be there mandatory. It is also possible that the touch sensitive layer 211 of the input unit also serves as a diffusing and/or protecting layer, thereby reducing the number of layers by one.

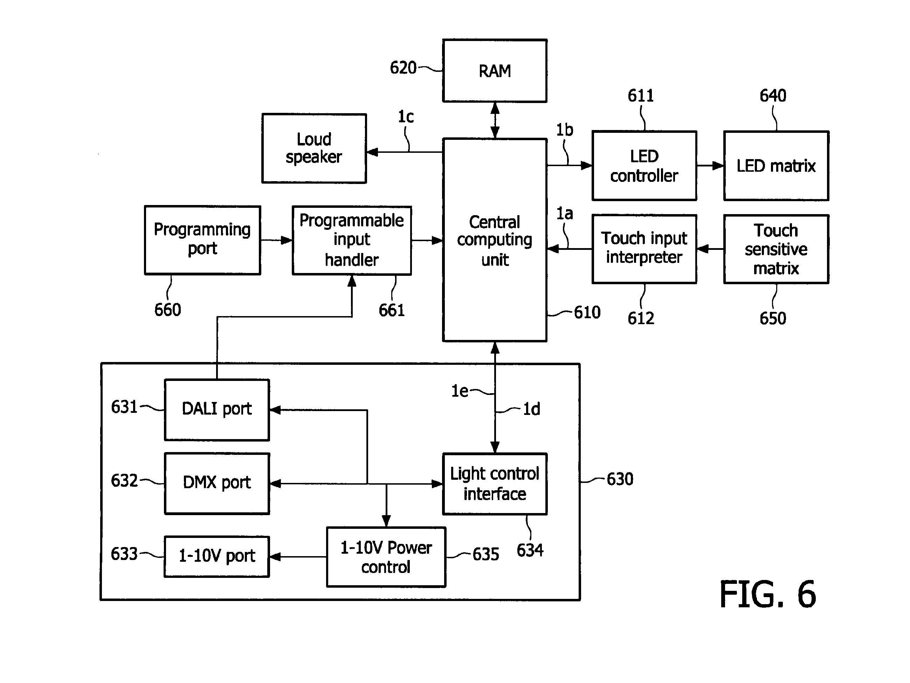

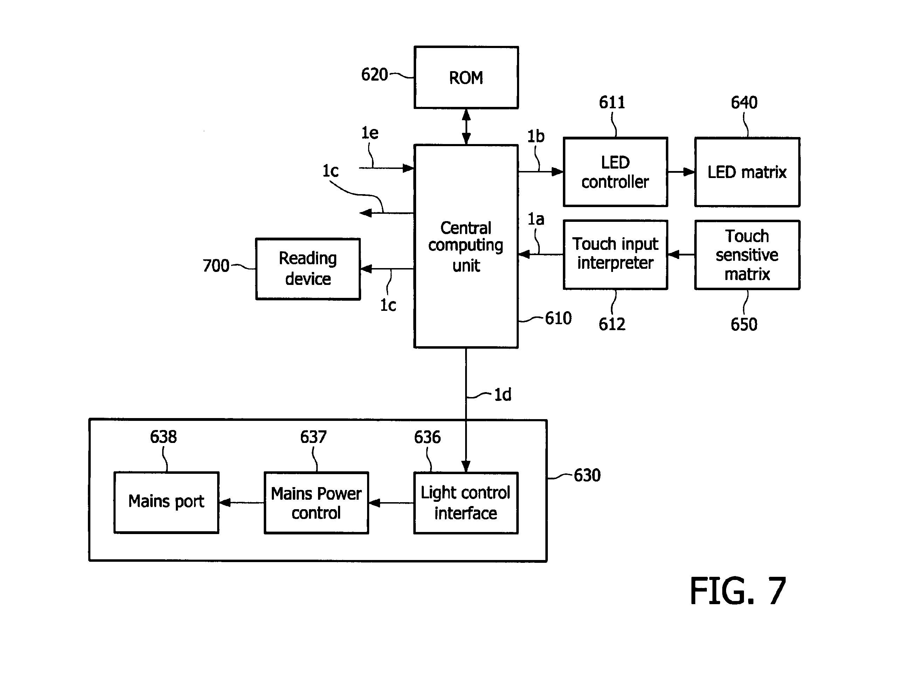

The LED matrix 220 is realized by a plurality of small full color solid state LEDs, e.g. RGB LEDs. It is not illustrated in figs. 2 or 3, but there are also components to handle the user input and to control the matrix of LEDs. The components to recognize the position of the user input and to control the matrix of LEDs are preferably arranged in the electronic control device 120, which will be illustrated in figs. 6 and 7.

A further preferred embodiment for the manual control device 210 is illustrated in fig. 3. Each LED 220 of the display unit 212 is surrounded by a touch sensitive element 230, which is arranged in the same layer like the LED 220. Thus, the manual control device 210 could be produced in a very flat shape by internesting the LEDs 220 and the touch sensitive elements. According to fig. 3, the LED matrix 220 having the plurality of single full color LEDs 220 and the touch sensitive elements 230 are integrated into one single layer 215. As shown in fig. 3, the touch sensitive elements 230 surround each single LED 220. However, it is also possible that two or a small group of LEDs 220 is surrounded by a touch sensitive element 230. Moreover, it is possible to use a kind of grid, wherein the LEDs 220 are arranged in between the crossings of the grid of touch sensitive elements 230. The LEDs 220 and the touch sensitive elements 230 are accommodated or supported by a rigid surface layer 215 or a flexible surface layer using flex foils.

A matrix of LEDs 220 is used to provide feed forward and feedback information on the status of the light and/or the effects of the user input on the connected light system. As already explained, by using the information signal 1b provided from the electronic device 120 to the manual control device 110, the light of the LEDs 220 represents nearly a similar light as the light provided by the light system 130, that is controlled. Alternatively or additionally, the matrix of LEDs 220 can be used as low-resolution display to render a user interface comparable to a graphical user interface by addressing the LEDs. The matrix can be used as low-resolution display for illustrating symbols or text.

The touch sensitive control layer 211 as shown in fig. 2 measures the user input. A first implementation of the touch sensitive layer 211 can be a touch pad that measures a position of an object (a finger) in two dimensions by means of capacitive sensing. This allows for relative precise user interaction. Alternatively, areas can be predefined as illustrated in fig. 2, so that the areas could be detected by a capacitive sensing means.

A further realization of an input device 411 is illustrated in fig. 4. In this embodiment, the position of user input is measured based on the light guidance within the light guidance layer 410. The light guiding layer 410 is arranged on the same position as the touch sensitive layer 211 in fig. 2. However, on the side surfaces of the light guiding layer 410, there are light generation units 420, wherein on the opposing side surfaces, there are light detection units 440. If a user presses the user input face, the light outputted by the light generation units 420 is influenced and the influenced light is detected by the detecting units 440. The reference light outputted by the light generation units 420 and the received light, which is influenced by the user input, are both provided to the microcontroller 450. The microcontroller 450 determines the position based on a comparison of the received light with a reference light. In such case, a light should be used, which has a different wave length than the light from the LED matrix 220 to avoid any interference. It is possible to use infrared-light, which is flashing at a specific frequency. This light is coupled into the light guidance layer 420 at the side, while at the other side the detecting sensor 440 detects the disturbance of the light transmission due to the pressure on the layer. The kind of input unit which is used depends on the specific application and on the cost requirements.

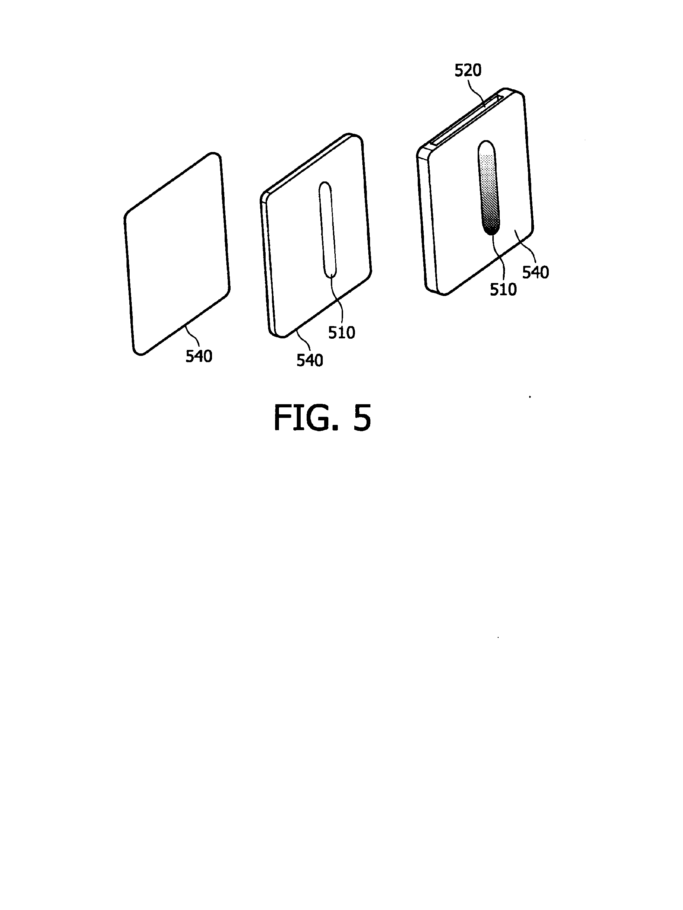

With reference to fig. 5, the cover layer 540 is explained in more detail. The cover layer 540 is arranged to protect the other two layers 211, 212 from dirt and humidity. It also functions as a light diffuser, so that light from the LED matrix 220 is recognized by a user in a smooth glow of light. This has the additional effect that the two inner layers 211, 212 are not visible to the user directly. The cover layer 540 can have a smooth surface as shown in the left hand figure of fig. 5, but it could also comprise a relief 510 indicating what areas can be pressed by a user depending on the control function that the user interface device offers to the user. The relief 510 as shown in the middle and right hand figures in fig. 5 can help the user to get a tactile feedback or indication where the user can press or how he can move his finger.

Additionally, the covering layer 540 can also comprise a slot 520 to insert an ID card or a piece of paper that provide more detailed information (feed forward) for the user depending on the control function provided by the user interface device.

As already mentioned above, the user interface device according to the present invention requires additional components to generate the respective information signal 1b and the control signal 1d. First of all, it requires a module that interprets the touch input from the touch sensitive control layer 211, 230. Secondly, it requires a module that controls the LED matrix 220. Moreover, it should include an output module that sends a control signaled to the light system 130 connected to the electronic control device 120. These signals 1d, 1b outputted by the electronic control device 120 can be of a certain protocol, such as DMX, DALI or amBX. It can be wired or wireless. The electronic control device 120 may have the respective connections for one or more these protocols. The electronic control device 120 can also directly control the connection of the light like a conventional on/off switch of demand.

In the following the construction of two embodiments of an electronic control device will be explained based on figs. 6 and 7.

An electronic control device 120 according to a first embodiment as shown in fig. 6 includes a central computing unit 610, which receives the respective user input with the switching signal 1a from the touch sensitive matrix 650, the user input is processed in a touch input interpreter 612, which provides the respective detected position to the central computing unit 610. The central computing unit 610 outputs the information 1b via the LED controller 611 to the LED matrix 640 to drive each single LED, respectively.

Moreover, the central computing unit 610 is connected to a memory 620, which may be realized as a RAM. However, also an exchangeable non-volatile memory like an EEPROM could be used. In particular, the memory 620 may include the different control functions, which could be performed by the user interface device of the present invention.

The central computing unit 610 is connected with an output unit 630 including a light control interface 634 transferring the control signal 1d to the respective protocol data unit 631-633 depending on the used protocol. There are three different output units, e.g. a DALI port 631, a DMX port 632 or a 1-10 V-port 633, which are all provided for outputting the respective control command 1d to the connected lighting system 130.

Moreover, the electronic control device 120 of the first embodiment could include a programming port 660 and programmable input handler 661 for receiving updates for the respective control functions, which could be performed by the user interface device of the present invention.

The embodiment shown in fig. 7 also includes a touch sensitive matrix 650 as input unit connected to the touch input interpreter 612 for providing a determined position to a central unit 610. As shown in fig. 7, the central computing unit 610 could be connected to a kind of ROM memory 620. The central computing unit 610 is also connected via the LED controller 611 to the LED matrix 640 for controlling each single LED 220. The central control unit 610 outputs via the output unit 630 the power of the connected light system directly. The output unit 630 includes a light control interface 636 transferring the control signal 1d into the respective signal form for the mains power control 637, which is connected to the mains port 638 for outputting the adjusted electrical power to the connected light system.

The central computing module 610 comprises a plurality of control functions, which can be performed by the user interface device and uses the user input to control the connected light system and the LED matrix 640 according to these control functions. The central computing unit 610 is programmable and hence the program including set of control functions needs to be stored in the memory 620.

As shown in fig. 6, the electronic control device may also include loudspeaker 670 for outputting an auditory signal to indicate that the user touch has been detected by the electronic control device. In that case, the central computing unit 610 would need to send out a signal 1c, that an auditory signal needs to be uttered by the loudspeaker 670. This auditory signal can be pre-programmed in the ROM module 620 or generated in real time for instance as a clicking sound. In either case, the small loudspeaker 670 needs to be integrated into the user interface device.

The electronic control device may be attached to the manual control device. However, it is also possible to integrate the electronic control device 120 in a central control unit, which is arranged remotely from the manual control device 110. In case of arranging the electronic control device 120 and the manual control device 110 spaced apart from each other the manual control device needs to be equipped with transmitting and receiving means for wirelessly or wired transfer of the switching signal 1a to the electronic control device which may include the detected position already, and the information signal 1b to the display unit.

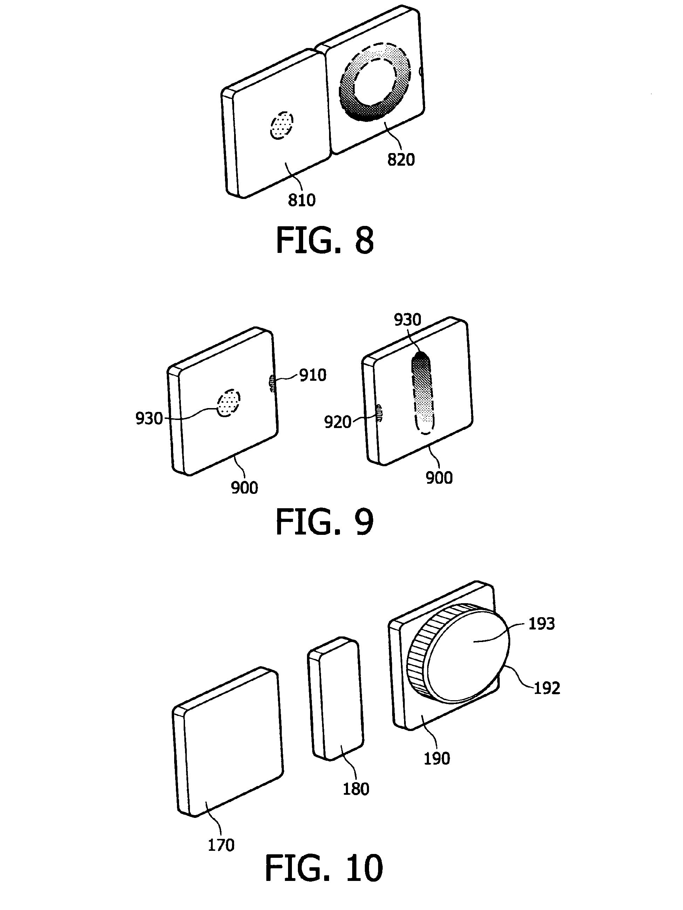

As shown in fig. 8, the user interface device may include two manual control devices, which represent different control functions. As shown in fig. 8, there may be one manual control device 810 for providing the on/off control function, which merely represents a pure switch, which illustrates a small light in case of being in an off state. The further manual control device 820 illustrates a dimming control or a color scale. For dimming control or color scale control the user may further adjust the respective brightness of the light system or may control the color of the respective light system. In case of having only a reduced space for installing the user interface device, it makes more sense to incorporate multiple control functions in one user interface device having a single central computing unit, wherein a plurality of different control functions could be offered all at the same time. However, this may be unclear due to the limited surface area of the manual control device and the display unit. Thus, it is more likely that only one of the set of control functions is presented at a time. This implies the need for navigation from one control function to another control function. It is possible to arrange navigation areas 910, 920 at the side surfaces or side edges of the manual control device as shown in fig. 9. When pressing the navigation area 910, the electronic control device will switch to the next control function and will illustrate the respective control function or elements representing the control function on the display unit of the manual control device. In case of switching back to the preceding control function the user has to press the navigation area 920 on the left edge of the manual control device. By providing such a small dot of light in the navigation area 910, 920 at the right/left hand side of the manual control device, the user can navigate from one control function to another control function.

One could also envision that all control functions are pre-programmed and stored in the memory 620. But only one control function would be used at the time. Other control functions may be triggered by changing the diffuse covering layer 540, wherein each diffused cover layer 540 is linked to a specific function and having a specific relief. The specific cover layer 540 is detected for instance by means of an RF-ID tag. Thus, the electronic control device needs to have a reading device, which is capable to identify the RF-ID tag and to provide the respective control function stored in the memory 620 or in an RF-ID tag to the user interface device to illustrate the respective control functions or control elements on the display unit, respectively.

A further possibility is that by changing the paper inlay inserted in the slot 520 as shown in fig. 5 a different control function could be triggered. In that case, the paper inlays would need to be detected by the electronic control device, which may be also possible by RF-ID tags. The reading unit integrated in the electronic control device may be an antenna or some electronics to detect the signals from the antenna. These electronics could be connected to the central computing unit 610, then activating a different control function depending on the detected RF-ID tag. It is also possible that different control functions are stored on a network, for instance on the Internet. If a user interface device detects a certain cover layer 540 or a certain paper inlay by means of the integrated RF-ID tag, it queries the network server for a program that is linked to the respective detected cover layer 540 or paper inlay and downloads it. After downloading the respective control function, which is linked to the specific cover layer 540, the control function is activated. Such functionality requires a more advanced controller having Internet connectivity or some kind of network support.

Fig. 10 illustrates different realizations of the outer shape of the user interface device according to the present invention. In fig. 10 left side the common shape of a light switch 170 is shown, wherein the whole area is used as a display area and as input area. However, it is also possible to only have a rectangular area 180 as shown in the middle of fig. 10 for providing a kind of sliding switch for providing dimming control functions or for adjusting the color temperature etc. As shown on the right hand in fig. 10, the manual control device 190 includes a rotary knob 192. Thus, one could achieve a further degree of freedom by moving the knob 192 to adjust a certain parameter (dimming) of the connected light system, wherein the surface of the dialing knob 193 represents the respective control function and the feedback information of the effects of the connected light system.

The invention can be applied for any light or light system including one lamp only or a plurality of different lamps. However, it is especially useful for lights or a light system with extended control possibilities like color control, timer, day light control ect. Such light systems are becoming available in professional domains like the retail domain but also in consumer domains like hotel rooms or homes. By using the present invention, it is possible to achieve a convenient control on a light system, which is easy to control and which provides the possibility to be reprogrammed to the required control functions, which are needed to control the connected control device.

## Claims

1. User interface device for controlling an electrical consumer (130) including at least one light appliance, comprising:
- a manual control unit device (110) including a display unit (112) and an input unit (111), the input unit (111) for generating a switching signal (1a) based on an user input; and
- an electronic control device (120) adapted to
- receive the switching signal (1a);
- generate an information signal (1b) based on the switching signal (1a), wherein the information signal (1b) is provided to the display unit (112); and
- output a control signal (1d) to the light appliance (130),
charactertised in that
- the information signal (1b) is based on the switching signal (1a) and a feedback signal (1e) received from the light appliance (130) related to a control setting of the light appliance, and includes information at least indicating a direct relation between a presentation on the display unit (112) and the control setting of the light appliance (130); and
- the display unit (112) is adapted to display the presentation based on the information included in the received information signal (1b), wherein a light output of the display unit (112) represents a characteristic of a light setting of the light appliance (130).

2. User interface device as claimed in claim 1, wherein the direct relation indicated by the information included in the information signal (1b) and output by the electronic control device (120) is a direct relation between a light output by the display unit (112) and the control setting of the light appliance (130).

3. User interface device according to one of the claims 1-2, wherein the display unit (112) includes a matrix of LED-elements (220) and/or the input unit (111) includes a matrix of touch sensitive elements (230), wherein the touch sensitive elements (230) are preferably operated based on capacitive sensing.

4. User interface device according to claim 3, wherein the input unit (111) and the display unit (112) are arranged internested to each other in a common layer (210) or arranged stacked on each other, wherein the input unit (111) is arranged in front of the display unit (112) or behind the display unit (112).

5. User interface device according to one of the claims 1-4, wherein the electronic control device (120) comprises:
at least one memory (620) for storing at least one electronic control function,
at least one microprocessor (610) for generating the information signal (1b) based on the switching signal (1a) and one of the at least one electronic control function stored in the memory (620) and/or the feedback signal (1e) received from the consumer load (130)
an output unit (630) for outputting electrical signals to the electrical consumer (130),
wherein preferably one single microprocessor (610) is adapted to perform a plurality of electronic control functions.

6. User interface device according to one of the claims 1-5, wherein at least one of the electronic control functions is a navigation function to be displayed on the display unit (112) and enabling the user to select between further electronic control functions, wherein the navigation function is preferably enabled based on a type of a covering layer (440) included in the manual control element (110) or based on an identification element, which is a paper inlay, or an identification element, wherein the identification element is included in an identification signal received via an antenna or a connection cable from a server or from the internet.

7. User interface device as claimed in one of the claims 1-6, further including a covering layer (440) covering the manual control device (110), wherein the covering layer (440) has a diffuse surface.

8. User interface device as claimed in claim 6, wherein the covering layer (440) comprises:
a relief (510) to indicate areas on the input unit (111) to receive a user input, and/or
a slot (520) for accommodating a paper or an ID card.

9. Method for controlling an electrical consumer (130) including at least one light appliance, comprising the steps of:
- receiving a user input on an input unit (111) and generating a switching signal (1a) based on the user input;
- generating a control signal (1d) based on the switching signal (1a) for controlling the light appliance (130);
- generating an information signal (1b) based on the switching signal (a),
- outputting the control signal (1d) to the light appliance (130), and
- outputting the information signal (1b) to a display unit (112)
**characterised in that** method further comprises
- receiving a feedback signal (1e) from the light appliance (130) related to a control setting of the light appliance;
- generating the information signal (1b) based on the switching signal (a) and the feedback signal (1e), wherein the information signal (1b) includes information at least indicating a direct relation between a presentation on the display unit (112) and the control setting of the light appliance (130);
- displaying the presentation on the display unit (112) based on information included in the received information signal (1b), wherein a light output of the display unit (112) represents a characteristic of a light setting of the light appliance (130).

10. Computer program or computer program product for performing the method as claimed in claim 10, when executed on a computer.

11. Data carrier including computer program code for performing the method as claimed in claim 9, when executed on a computer.

12. Computer programmed to execute the computer program as claimed in claim 10.

13. User interface device for controlling an electrical consumer (130) as claimed in claim 1, comprising:
a touch sensitive device, comprising:
a light guidance layer (410) having a user input face; and
a light generating unit (420) adapted to output light, which is coupled into at least one side face of the light guidance layer (410), the light generating unit (420) is adapted to generate a reference light, in particular IR-light, and
a light reception unit (440) coupled to an opposing side face of the light guidance layer (420), wherein the light reception unit (440) is adapted to receive the light guided through the light guidance layer (410), wherein the touch sensitive device is adapted to compare the light received through the light guidance layer (430) with the reference light and to determine a position of a user input based disturbances in the received light.

## Patentansprüche

1. Benutzeroberfläche zur Steuerung eines mindestens eine Beleuchtungseimichtung enthaltenden elektrischen Verbrauchers (130), umfassend:
- eine manuelle Steuereinheit (110) mit einer Anzeigeeinheit (112) und einer Eingabeeinheit (111), wobei die Eingabeeinheit (111) zur Erzeugung eines auf einer Benutzereingabe basierenden Schaltsignals (1a) dient; sowie
- eine elektronische Steuereinrichtung (120), die so eingerichtet ist, dass sie
- das Schaltsignal (1a) empfängt;
- ein auf dem Schaltsignal (1a) basierendes Informationssignal (1b) erzeugt, wobei das Informationssignal (1b) der Anzeigeeinheit (112) zugeführt wird; und
- ein Steuersignal (1d) an die Beleuchtungseinrichtung (130) ausgibt,
**dadurch gekennzeichnet, dass**
- das Informationssignal (1b) auf dem Schaltsignal (1a) und einem von der Beleuchtungseimichtung (130) empfangenen, auf eine Steuereinstellung der Beleuchtungseimichtung bezogenen Rückführsignal (1e) basiert und Informationen enthält, die zumindest eine direkte Beziehung zwischen einer Darstellung auf der Anzeigeeinheit (112) und der Steuereinstellung der Beleuchtungseinrichtung (130) anzeigen; und
- die Anzeigeeinheit (112) so eingerichtet ist, dass sie die Darstellung aufgrund der in dem empfangenen Informationssignal (1b) enthaltenen Informationen zeigt, wobei ein Lichtstrom der Anzeigeeinheit (112) eine Charakteristik einer Lichteinstellung der Beleuchtungseinrichtung (130) darstellt.

2. Benutzeroberfläche nach Anspruch 1, wobei die durch die in dem von der elektronischen Steuereinrichtung (120) ausgegebenen Informationssignal (1b) enthaltenen Informationen angezeigte direkte Beziehung eine direkte Beziehung zwischen einem von der Anzeigeeinheit (112) abgegebenen Licht und der Steuereinstellung der Beleuchtungseimichtung (130) darstellt.

3. Benutzeroberfläche nach einem der Ansprüche 1-2, wobei die Anzeigeeinheit (112) eine Matrix von LED-Elementen (220) enthält und/oder die Eingabeeinheit (111) eine Matrix von berührungsempfindlichen Elementen (230) enthält, wobei die berührungsempfindlichen Elemente (230) vorzugsweise aufgrund kapazitiver Erfassung betrieben werden.

4. Benutzeroberfläche nach Anspruch 3, wobei die Eingabeeinheit (111) und die Anzeigeeinheit (112) in einer gemeinsamen Schicht (210) ineinander geschachtelt angeordnet oder aufeinander gestapelt angeordnet sind, wobei die Eingabeeinheit (111) vor der Anzeigeeinheit (112) oder hinter der Anzeigeeinheit (112) angeordnet ist.

5. Benutzeroberfläche nach einem der Ansprüche 1-4, wobei die elektronische Steuereinrichtung (120) umfasst:
mindestens einen Speicher (620) zur Speicherung von mindestens einer elektronischen Steuerfunktion,
mindestens einen Mikroprozessor (610) zur Erzeugung des Informationssignals (1b) auf der Basis des Schaltsignals (1a) sowie der in dem Speicher (620) gespeicherten mindestens einen elektronischen Steuerfunktion und/oder des von der Verbraucherlast (130) empfangenen Rückführsignals (1e),
eine Ausgabeeinheit (630) zur Abgabe elektrischer Signale an den elektrischen Verbraucher (130),
wobei vorzugsweise ein einzelner Mikroprozessor (610) so eingerichtet ist, dass er mehrere elektronische Steuerfunktionen ausführt.

6. Benutzeroberfläche nach einem der Ansprüche 1-5, wobei mindestens eine der elektronischen Steuerfunktionen eine Navigationsfunktion ist, die auf der Anzeigeeinheit (112) darzustellen ist und dem Benutzer die Möglichkeit gibt, zwischen weiteren elektronischen Steuerfunktionen auszuwählen, wobei die Navigationsfunktion vorzugsweise aufgrund eines Typs einer in dem manuellen Steuerelement (110) enthaltenen Deckschicht (440) oder aufgrund eines Identifikationselements, das eine Papiereinlage oder ein anderes Identifikationselement ist, ermöglicht wird, wobei das Identifikationselement in einem Identifikationssignal enthalten ist, das über eine Antenne oder ein Verbindungskabel von einem Server oder aus dem Internet empfangen wird.

7. Benutzeroberfläche nach einem der Ansprüche 1-6, die weiterhin eine die manuelle Steuereinrichtung (110) bedeckende Deckschicht (440) enthält, wobei die Deckschicht (440) eine diffuse Oberfläche aufweist.

8. Benutzeroberfläche nach Anspruch 6, wobei die Deckschicht (440) umfasst:
ein Relief (510), um Bereiche auf der Eingabeeinheit (111) zum Empfang einer Benutzereingabe zu kennzeichnen, und/oder
einen Schlitz (520) zur Aufnahme eines Papiers oder einer ID-Karte.

9. Verfahren zur Steuerung eines mindestens eine Beleuchtungseinrichtung enthaltenden elektrischen Verbrauchers (130), wobei das Verfahren die folgenden Schritte umfasst, wonach:
- eine Benutzereingabe auf einer Eingabeeinheit (111) empfangen und ein auf der Benutzereingabe basierendes Schaltsignal (1a) erzeugt wird;
- ein auf dem Schaltsignal (1a) basierendes Steuersignal (1d) zur Steuerung der Beleuchtungseinrichtung (130) erzeugt wird;
- ein auf dem Schaltsignal (1a) basierendes Informationssignal (1b) erzeugt wird;
- das Steuersignal (1d) an die Beleuchtungseimichtung (130) ausgegeben wird;
- das Informationssignal (1b) an eine Anzeigeeinheit (112) ausgegeben wird;
**dadurch gekennzeichnet, dass** das Verfahren weiterhin die folgenden Schritte umfasst, wonach:
- ein auf eine Steuereinstellung der Beleuchtungseinrichtung bezogenes Rückführsignal (1e) von der Beleuchtungseinrichtung (130) empfangen wird;
- das auf dem Schaltsignal (1a) und dem Rückführsignal (1e) basierende Informationssignal (1b) erzeugt wird, wobei das Informationssignal (1b) Informationen enthält, die zumindest eine direkte Beziehung zwischen einer Darstellung auf der Anzeigeeinheit (112) und der Steuereinstellung der Beleuchtungseinrichtung (130) anzeigen;
- die Darstellung auf der Anzeigeeinheit (112) aufgrund von in dem empfangenen Informationssignal (1b) enthaltenen Informationen gezeigt wird, wobei ein Lichtstrom der Anzeigeeinheit (112) eine Charakteristik einer Lichteinstellung der Beleuchtungseimichtung (130) darstellt.

10. Computerprogramm oder Computerprogrammprodukt zur Durchführung des Verfahrens nach Anspruch 9, wenn dieses auf einem Computer ausgeführt wird.

11. Datenträger mit Computerprogrammcode zur Durchführung des Verfahrens nach Anspruch 9, wenn dieser auf einem Computer ausgeführt wird.

12. Computer, der so programmiert wird, dass er das Computerprogramm nach Anspruch 10 ausführt.

13. Benutzeroberfläche zur Steuerung eines elektrischen Verbrauchers (130) nach Anspruch 1, umfassend:
eine berührungsempfindliche Einrichtung mit:
einer Lichtleitschicht (410) mit einer Benutzereingabefläche; sowie
einer Lichterzeugungseinheit (420), die so eingerichtet ist, dass sie Licht abgibt, das in mindestens eine Seitenfläche der Lichtleitschicht (410) eingekoppelt wird, wobei die Lichterzeugungseinheit (420) so eingerichtet ist, dass sie ein Referenzlicht, vorzugsweise IR-Licht, erzeugt, sowie
eine Lichtempfangseinheit (440), die mit einer gegenüberliegenden Seitenfläche der Lichtleitschicht (420) gekoppelt ist, wobei die Lichtempfangseinheit (440) so eingerichtet ist, dass sie das durch die Lichtleitschicht (410) geleitete Licht empfängt, wobei die berührungsempfindliche Einrichtung so eingerichtet ist, dass sie das durch die Lichtleitschicht (430) empfangene Licht mit dem Referenzlicht vergleicht und eine auf Störungen in dem empfangenen Licht basierende Position einer Benutzereingabe ermittelt.

## Revendications

1. Dispositif d'interface utilisateur pour commander un consommateur électrique (130) comprenant au moins un appareil lumineux, comprenant :
- un dispositif à unité de commande manuelle (110) comprenant une unité d'affichage (112) et une unité d'entrée (111), l'unité d'entrée (111) étant destinée à générer un signal de commutation (1a) en fonction d'une entrée utilisateur ; et
- un dispositif de commande électronique (120) adapté pour :
- recevoir le signal de commutation (1a) ;
- générer un signal d'informations (1b) en fonction du signal de commutation (1a), dans lequel le signal d'informations (1b) est fourni à l'unité d'affichage (112) ; et
- envoyer un signal de commande (1d) à l'appareil lumineux (130),
**caractérisé en ce que**
- le signal d'informations (1b) est fondé sur le signal de commutation (1a) et un signal de rétroaction (1e) reçu à partir de l'appareil lumineux (130) connexe à un réglage de commande de l'appareil lumineux, et comprend des informations indiquant au moins une relation directe entre une présentation sur l'unité d'affichage (112) et le réglage de commande de l'appareil lumineux (130) ; et
- l'unité d'affichage (112) est adaptée pour afficher la présentation en fonction des informations incluses dans le signal d'informations reçu (1b), dans lequel un rendement lumineux de l'unité d'affichage (112) représente une caractéristique d'un réglage de lumière de l'appareil lumineux (130).

2. Dispositif d'interface utilisateur selon la revendication 1, dans lequel la relation directe indiquée par les informations incluses dans le signal d'informations (1b) et envoyées par le dispositif de commande électronique (120) est une relation directe entre un rendement lumineux par l'unité d'affichage (112) et le réglage de commande de l'appareil lumineux (130).

3. Dispositif d'interface utilisateur selon une des revendications 1 et 2, dans lequel l'unité d'affichage (112) comprend une matrice d'éléments à LEDs (220) et/ou l'unité d'entrée (111) comprend une matrice d'éléments tactiles (230), dans lequel les éléments tactiles (230) sont de préférence actionnés en fonction de détection capacitive.

4. Dispositif d'interface utilisateur selon la revendication 3, dans lequel l'unité d'entrée (111) et l'unité d'affichage (112) sont agencées de façon mutuellement emboîtée l'une avec l'autre dans une couche commune (210) ou agencées empilées l'une sur l'autre, dans lequel l'unité d'entrée (111) est agencée devant l'unité d'affichage (112) ou derrière l'unité d'affichage (112).

5. Dispositif d'interface utilisateur selon une des revendications 1 à 4, dans lequel le dispositif de commande électronique (120) comprend :
au moins une mémoire (620) pour stocker au moins une fonction de commande électronique,
au moins un microprocesseur (610) pour générer le signal d'informations (1b) en fonction du signal de commutation (1a) et un parmi l'au moins une fonction de commande électronique stockée dans la mémoire (620) et/ou le signal de rétroaction (1e) reçu à partir de la charge consommatrice (130),
une unité de sortie (630) pour envoyer des signaux électriques au consommateur électrique (130),
dans lequel, de préférence, un seul microprocesseur (610) est adapté pour réaliser une pluralité de fonctions de commande électronique.

6. Dispositif d'interface utilisateur selon une des revendications 1 à 5, dans lequel au moins une des fonctions de commande électronique est une fonction de navigation destinée à être affichée sur l'unité d'affichage (112) et permettant à l'utilisateur de sélectionner entre des fonctions de commande électronique supplémentaires, dans lequel la fonction de navigation est de préférence activée en fonction d'un type d'une couche de couverture (440) incluse dans l'élément de commande manuelle (110) ou en fonction d'un élément d'identification, qui est un empiècement en papier, ou un élément d'identification, dans lequel l'élément d'identification est inclus dans un signal d'identification signal reçu par l'intermédiaire d'une antenne ou d'un câble de connexion à partir d'un serveur ou à partir d'Internet.

7. Dispositif d'interface utilisateur selon une des revendications 1 à 6, comprenant en outre une couche de couverture (440) couvrant le dispositif de commande manuelle (110), dans lequel la couche de couverture (440) possède une surface diffuse.

8. Dispositif d'interface utilisateur selon la revendication 6, dans lequel la couche de couverture (440) comprend :
un relief (510) pour indiquer des zones sur l'unité d'entrée (111) pour recevoir une entrée utilisateur, et/ou
une fente (520) pour loger un papier ou une carte d'identité.

9. Procédé pour commander un consommateur électrique (130) comprenant au moins un appareil lumineux, comprenant les étapes de :
- la réception d'une entrée utilisateur sur une unité d'entrée (111) et la génération d'un signal de commutation (1a) en fonction de l'entrée utilisateur ;
- la génération d'un signal de commande (1d) en fonction du signal de commutation (1a) pour commander l'appareil lumineux (130) ;
- la génération d'un signal d'informations (1b) en fonction du signal de commutation (a),
- l'envoi du signal de commande (1d) à l'appareil lumineux (130), et
- l'envoi du signal d'informations (1b) à une unité d'affichage (112), **caractérisé en ce que** le procédé comprend en outre :
- la réception d'un signal de rétroaction (1e) à partir de l'appareil lumineux (130) connexe à un réglage de commande de l'appareil lumineux ;
- la génération du signal d'informations (1b) en fonction du signal de commutation (1a) et du signal de rétroaction (1e), dans lequel le signal d'informations (1b) comprend des informations indiquant au moins une relation directe entre une présentation sur l'unité d'affichage (112) et le réglage de commande de l'appareil lumineux (130) ;
- l'affichage de la présentation sur l'unité d'affichage (112) en fonction d'informations incluses dans le signal d'informations reçu (1b), dans lequel un rendement lumineux de l'unité d'affichage (112) représente une caractéristique d'un réglage de lumière de l'appareil lumineux (130).

10. Programme d'ordinateur ou produit programme d'ordinateur pour réaliser le procédé selon la revendication 10, lorsqu'il est exécuté sur un ordinateur.

11. Support de données comprenant un code de programme d'ordinateur pour réaliser le procédé selon la revendication 9, lorsqu'il est exécuté sur un ordinateur.

12. Ordinateur programmé pour exécuter le programme d'ordinateur selon la revendication 10.

13. Dispositif d'interface utilisateur pour commander un consommateur électrique (130) selon la revendication 1, comprenant :
un dispositif tactile, comprenant :
une couche de guidage de lumière (410) comportant une face d'entrée utilisateur ; et
une unité de génération de lumière (420) adaptée pour envoyer de la lumière, qui est couplée dans au moins une face latérale de la couche de guidage de lumière (410), l'unité de génération de lumière (420) est adaptée pour générer une lumière de référence, en particulier de la lumière IR, et
une unité de réception de lumière (440) couplée à une face latérale opposée de la couche de guidage de lumière (420), dans lequel l'unité de réception de lumière (440) est adaptée pour recevoir la lumière guidée par l'intermédiaire de la couche de guidage de lumière (410), dans lequel le dispositif tactile est adapté pour comparer la lumière reçue par l'intermédiaire de la couche de guidage de lumière (430) à la lumière de référence et pour déterminer une position d'une entrée utilisateur en fonction de dérangements de la lumière reçue.
